# EUROPÄISCHE PATENTANMELDUNG

(11) **EP 2 942 532 A1**
(43) Veröffentlichungstag der Anmeldung: **11.11.2015**
(21) Anmeldenummer: 15401016.9
(22) Anmeldetag: 05.03.2015
(51) Int. Cl.: F04F 5/54, F04F 5/18, F04F 5/36, B60R 21/26, B60R 21/30, F42B 3/04, F42D 5/045

(54) **VORRICHTUNG MIT EINEM EINE PYROTECHNISCHE TREIBLADUNG AUFWEISENDEN GASGENERATOR ZUR ERZEUGUNG EINER DRUCKGASSTRÖMUNG**

(30) Priorität: 17.03.2014 DE 102014103629
(71) Anmelder: Haase, Joachim, 30173 Hannover (DE)
(72) Erfinder: Haase, Joachim, 30173 Hannover (DE)
(74) Vertreter: Scheffler, Jörg

(57) **Zusammenfassung**

Die Erfindung betrifft eine als Strahlpumpe ausgeführte Vorrichtung (1) mit einem Gasgenerator (2) zur Erzeugung einer Druckgasströmung (3), wobei der Gasgenerator (2) mit einer als Schneid- oder Hohlladung ausgeführten pyrotechnischen Treibladung (4) ausgestattet ist. Diese pyrotechnische Treibladung (4) dient der Erzeugung einer Druckwelle als Druckgasströmung (3) aus den Verbrennungsgasen der Treibladung (4). Die Vorrichtung (1) ist mit einer im Bereich des kleinsten Querschnittes einer Venturi-Düse angeordneten Einlassöffnung (5) eines Einlasskanals (6) ausgestattet, sodass durch den entstehenden Sog durch eine Absaugöffnung (7) des Einlasskanals (6) Umgebungsluft angesaugt wird. Diese Druckdifferenz kann für verschiedene Zwecke genutzt werden. So können beispielsweise schädliche Druckwellen, etwa von Explosionen, kompensiert und damit unschädlich gemacht werden.

## Beschreibung

Die Erfindung betrifft eine insbesondere als eine Strahlpumpe ausgeführte Vorrichtung mit einem eine pyrotechnische Treibladung aufweisenden Gasgenerator, wobei eine mittels der pyrotechnischen Treibladung erzeugbare Druckgasströmung in eine mit einer Venturi-Düse ausgestattete Düsenanordnung einleitbar ist, um schlagartig einen Überdruck zu erzeugen und die Vorrichtung einen Einlasskanal mit zumindest einer Einlassöffnung sowie einen Auslasskanal mit zumindest einer Auslassöffnung aufweist, sodass durch den in der Venturi-Düse entstehenden Unterdruck mittels des Einlasskanals ein Fluid ansaugbar und gemeinsam mit der Gasströmung der Auslassöffnung zuführbar ist.

In der US 3,847,411 A wird eine Vorrichtung beschrieben, welche mittels eines protechnischen Gasgenerators in einem Fahrgastraum beim Auslösen eines Airbags einen Unterdruck erzeugt, sodass eine durch den ausgelösten Airbag erzeugte Druckwelle für einen Insassen keine Gefahr darstellt. Hierzu hat die Vorrichtung einen Airbag, bei dem zur Druckerzeugung eine Treibladung in Verbindung mit einer Venturi-Düse verwendet wird. Ein Einlasskanal hat zumindest eine im Bereich der Venturi-Düse angeordnete Einlassöffnung sowie zumindest eine Absaugöffnung, welche in einem geschlossenen Gehäuse angeordnet sind.

Aus der DE 32 12 303 A1 ist eine Vorrichtung bekannt, die bereits die Kombination einer chemischen Treibladung mit einer Strahlpumpe offenbart. Die gaserzeugende chemische Treibladung befindet sich eingepresst in einer druckbeständigen Hülse. Die Treibladung soll sich möglichst unter großer Gasausbeute vollständig und rückstandsfrei zersetzen. Im Düsenvorraum baut sich dadurch ein Druck auf, dessen Höhe sich aus der Menge des entstehenden Gases und dem kleinsten Querschnitt der Strahldüse ergibt und ca. 10 bar erreichen kann. Die Strahldüse hat die Form einer Laval-Düse. Der aus der Strahldüse austretende Gasstrahl erzeugt im Bereich eines Auslasskanals einen starken Sog, sodass über seitliche Einlasskanäle atmosphärische Luft angesaugt wird. Diese Luft vermischt sich im Rohr mit dem Gasstrahl aus der Treibladung und bildet mit ihm gemeinsam das Füllgas für einen mit dem Gas zu füllenden Gebrauchsgegenstand, beispielsweise ein Schlauchboot, der seinerseits an der Auslassöffnung direkt oder mittels einer Schlauchverbindung angeschlossen wird. Mengenmäßig hat die angesaugte Luft das mehrfache Volumen des durch die Treibladung freigesetzten Gases.

Die EP 2 404 794 B1 bezieht sich auf eine Vorrichtung zur Notbremsung eines Fahrzeuges mit einer Bremsplatte, die an eine Vakuumpumpe angeschlossene, gegen die Fahrbahn offene Unterdruckkammern hat. Um einen ausreichenden Unterdruck in den Unterdruckkammern in einer für eine Notbremsung angemessen kurzen Zeitspanne aufbauen zu können, ist die Vakuumpumpe als Strahlpumpe ausgebildet, wobei die Strahlpumpe über eine zündbare Treibladung mit Druckgas beaufschlagt wird.

Ferner ist beispielsweise aus der DE 40 18 348 A1 eine Aufprallschutzvorrichtung mit einem aufblasbaren Gaskissen in einem Fahrzeug bekannt, die mit einer Gasgeneratoreinheit zur Erzeugung des Treibgases für das Aufblasen des Gaskissens ausgestattet ist. Die Gasgeneratoreinheit hat eine pyrotechnische Treibladung mit Zündeinheit und ist mit einem Auslösesensor verbunden.

Ausgehend von diesem Stand der Technik liegt der Erfindung die Aufgabe zugrunde, eine als Strahlpumpe ausgeführte Vorrichtung zur Verwendung in Räumen zu schaffen, wobei die erzeugte Druckgasströmung den Erfordernissen entsprechend veränderbar ist.

Diese Aufgabe wird erfindungsgemäß mit einer Vorrichtung gemäß den Merkmalen des Anspruches 1 gelöst. Die weitere Ausgestaltung der Erfindung ist den Unteransprüchen zu entnehmen.

Erfindungsgemäß ist die mittels der Treibladung erzeugbare Druckgasströmung zumindest hinsichtlich der Stärke oder des zeitlichen Verlaufes entsprechend mittels eines Drucksensors erfasster Messwerte veränderbar, wobei die Absaugöffnung und die Auslassöffnung räumlich getrennt, in abgetrennten Räumen angeordnet sind. Dadurch lässt sich eine Interferenz der erfassten explosionsartigen Druckwelle und der durch die Treibladung erzeugten Unterdruckwelle erzeugen, mit der Folge einer im Idealfall vollkommenen Auslöschung. Insbesondere wird dabei vermieden, dass sich der erzeugte Unterdruck in unerwünschter Weise nachteilig innerhalb des Raumes, in dem sich die Absaugöffnung befindet, auswirken kann. Indem die Absaugöffnung und die Auslassöffnung räumlich getrennt, insbesondere in abgetrennten Räumen angeordnet sind, kann die Druckgasströmung auch über vergleichsweise große Entfernungen von der Entstehung der Druckwelle abgeleitet werden. Insbesondere kann so eine Personengefährdung zuverlässig ausgeschlossen werden. Hierdurch wird erstmals die Möglichkeit geschaffen, eine entsprechend der sich explosionsartig aufbauenden Druckgasströmung erzeugte Absaugströmung zu nutzen. Hierzu ist der Einlasskanal, der selbstverständlich den jeweiligen Einsatzzwecken entsprechend durch eine Leitung verlängert werden kann, mit seiner Absaugöffnung in einem zu evakuierenden Raum positionierbar. Der Erfindung liegt somit die Erkenntnis zugrunde, dass mittels der Treibladung durch die erfindungsgemäße Vorrichtung schlagartig eine Absaugströmung erzeugt werden kann, durch die ebenso schlagartig ein Unterdruck erzeugt und dieser für unterschiedlichste und äußerst vielfältige Aufgaben genutzt werden kann. So kann beispielsweise eine Druckentlastung in Fahrzeugen, insbesondere Flugzeugen, Schiffen, Zügen sowie beliebigen anderen Land-, Luft- und Wasserfahrzeugen erreicht werden, um so der Ausbreitung einer Druckwelle entgegenzuwirken oder deren Auswirkungen zumindest soweit zu vermindern, dass eine Gefährdung von Personen vermieden werden kann.

Obwohl die möglichen Einsatzzwecke aufgrund ihres Umfanges nicht abschließend aufgeführt werden können, ergeben sich dennoch zwei bevorzugte Einsatzmöglichkeiten. Zum einen kann die Unterdruckwelle gezielt zur Zerstörung der Struktur des Raumes durch eine Implosion genutzt werden. Auf diese Weise können beispielsweise Gebäude zum Einsturz gebracht werden, ohne das Risiko einer Explosion, bei der herausgeschleuderte Objekte zu einer potentiellen Gefährdung von Personen und zur Beschädigung von umliegenden Gebäuden führen können. Zum anderen kann die zerstörerische Wirkung einer Explosionswelle durch die erfindungsgemäße Vorrichtung wesentlich vermindert oder sogar vollständig neutralisiert werden, indem die Explosionswelle durch die Unterdruckströmung durch den Einlasskanal, die Düsenanordnung und den Auslasskanal abgeführt wird. Dabei kann die Auslassöffnung insbesondere nach außen in die Umgebung führen, sodass die dort austretende Druckgasströmung keine schädliche Wirkung entfalten kann. Nach dem erfindungsgemäßen Prinzip können so insbesondere Sicherheitseinrichtungen für chemische oder verfahrenstechnische Anlagen, für Gasnetze oder auch im Bergbau ebenso realisiert werden wie Schutzvorrichtungen vor Sprengsätzen.

Dabei lässt sich die Wirksamkeit der erfindungsgemäßen Vorrichtung dadurch weiter verbessern, dass die Einlassöffnung im Bereich einer kleinsten Querschnittsfläche der Venturi-Düse angeordnet ist, um so eine optimale Umsetzung der Druckgasströmung zur Absaugung durch den Einlasskanal zu erreichen. Die Venturi-Düse kann hierzu beispielsweise auch als Laval-Düse ausgeführt sein.

Die Vorrichtung kann durch manuelles Auslösen der Treibladung betätigt und aktiviert werden, wobei mehrere Zündstufen oder Treibladungsmengen ausgewählt werden können. Besonders praxisgerecht ist es vor allem im Hinblick auf Sicherheitseinrichtungen, wenn die Vorrichtung mit einer Steuereinheit und einem Drucksensor ausgestattet ist. Mittels des Drucksensors wird ein plötzlicher Druckanstieg aufgrund einer explosionsartigen Druckausbreitung zuverlässig erkannt und mittels der Steuereinheit ein Steuerbefehl zum Auslösen der Treibladung erzeugt. Dabei kann die Stärke der so aktivierten Treibladungsmenge in Abhängigkeit der von dem Drucksensor erfassten Druckdifferenz eingestellt werden.

Eine besonders praxisgerechte Ausführungsform der Erfindung wird auch dadurch erreicht, dass die Treibladung derart konkav ausgeführt ist, dass eine zu einer Achse konzentrische Druckgasströmung erzeugbar ist. Hierdurch wird eine Detonationsfront als eine gerichtete Stoßwelle erzeugt, um so in besonders effizienter Weise die Druckgasströmung zu erzeugen. Insbesondere wird so aufgrund der konkaven Form der Treibladung der Druckgasströmung eine definierte Wirkrichtung aufgeprägt und dadurch eine besonders effiziente Umsetzung der explosionsartigen Ausdehnung der Treibladung in die gewünschte Druckgasströmung erreicht.

Gemäß einer weiteren vorteilhaften Ausgestaltungsform weist die Treibladung eine kegelmantelförmige Einlage mit einer nach vorn gerichteten Öffnung auf. Die Einlage ist mit einem brisanten Sprengstoff umgeben, wobei der Sprengstoff in der durch die Einlage bestimmten Form verdichtet, beispielsweise gepresst ist. Ein Zünder ist mit der Treibladung verbunden. Wird die Treibladung gezündet, so bildet sich ausgehend von der Spitze der kegelmantelförmigen Einlage eine gerichtete, insbesondere lineare Druckwelle aus, die mit sehr hoher Strömungsgeschwindigkeit in die Düsenanordnung eingekoppelt wird. Die Erzeugung dieser gerichteten Druckwelle basiert auf dem Effekt, dass sich bei der Detonation der Hohlladung die Detonationsfront als Stoßwelle mit Überschallgeschwindigkeit ausbreitet und die resultierende Kraft gebündelt in einer Linie entlang einer Achse wirksam wird. In der Praxis bildet sich so ein kumulativer Strahl.

Hierbei hat es sich bereits als besonders praxisnah erwiesen, wenn die Vorrichtung mehrere, an gegenüberliegenden Seiten der Treibladung angeordnete Düsenanordnungen aufweist. Durch den so realisierten symmetrischen Aufbau heben sich die entstehenden Reaktionskräfte bei der Detonation der Treibladung und der Einleitung in die Düsenanordnung in der Summe auf, sodass die Vorrichtung insbesondere nur geringe Fixierkräfte erfordert. Zudem kann die Vorrichtung dadurch vergleichsweise kompakt und beispielsweise auch als eine mobil mitführbare Einheit ausgeführt sein.

Die Vorrichtung kann darüber hinaus auch in eine persönliche Schutzausrüstung oder Schutzkleidung integriert werden. Beispielsweise kann die Vorrichtung einen Bestandteil der persönlichen Schutzausrüstung für Kampfmittelräumdienste bilden und in einen Rucksack oder in einen Bein- oder Fußschutz integriert sein.

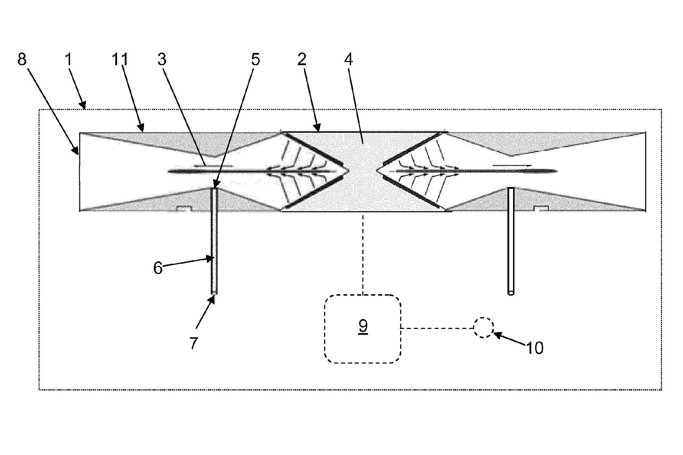

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Prinzipdarstellung eine Vorrichtung 1 mit einem Gasgenerator 2 zur Erzeugung einer Druckgasströmung 3, wobei der Gasgenerator 2 mit einer als Schneid- oder Hohlladung ausgeführten pyrotechnischen Treibladung 4 ausgestattet ist. Diese pyrotechnische Treibladung 4 dient der Erzeugung einer Druckwelle als Druckgasströmung 3 aus den Verbrennungsgasen der Treibladung 4. Nach dem an sich bekannten Prinzip der Venturi-Düse wird ein ebenso schlagartiger Unterdruck erzeugt. Die Vorrichtung 1 ist hierzu mit einer im Bereich des kleinsten Querschnittes einer die Venturi-Düse aufnehmenden Düsenanordnung 11 angeordneten Einlassöffnung 5 eines Einlasskanals 6 ausgestattet, sodass durch den entstehenden Sog durch eine Absaugöffnung 7 des Einlasskanals 6 Umgebungsluft angesaugt und einer Auslassöffnung 8 zugeführt wird. Diese Druckdifferenz kann für verschiedene Zwecke genutzt werden. So können beispielsweise schädliche Druckwellen, beispielsweise von Explosionen, kompensiert und damit unschädlich gemacht werden. Hierzu ist die Vorrichtung 1 mit einer Steuereinheit 9 und einem Drucksensor 10 zur Erfassung von Druckdifferenzen ausgestattet. Indem die Vorrichtung 1 zwei an einander gegenüberliegenden Seiten der Treibladung 4 angeordnete Düsenanordnungen 11 hat, wird ein symmetrischer Aufbau realisiert, der im Betrieb weitgehend frei von äußeren Kräften ist.

## Patentansprüche

1. Vorrichtung (1) mit einem eine pyrotechnische Treibladung (4) aufweisenden Gasgenerator (2), wobei eine mittels der pyrotechnischen Treibladung (4) erzeugbare Druckgasströmung (3) in eine mit einer Venturi-Düse ausgestattete Düsenanordnung (11) einleitbar ist, die einen Einlasskanal (6) mit zumindest einer Einlassöffnung (5) sowie einen Auslasskanal mit zumindest einer Auslassöffnung (8) aufweist, wobei der Einlasskanal (6) zumindest eine im Bereich der Venturi-Düse angeordnete Einlassöffnung (5) sowie zumindest eine Absaugöffnung (7) aufweist, welche in einem Raum positionierbar ausgeführt ist, **dadurch gekennzeichnet, dass** die mittels der Treibladung (4) erzeugbare Druckgasströmung (3) zumindest hinsichtlich der Stärke und/oder des zeitlichen Verlaufes entsprechend mittels eines Drucksensors (10) erfasster Messwerte veränderbar ist und dass die Absaugöffnung (7) und die Auslassöffnung (8) räumlich getrennt angeordnet sind.

2. Vorrichtung (1) nach Anspruch 1, **dadurch gekennzeichnet, dass** die Einlassöffnung (5) im Bereich einer kleinsten Querschnittsfläche der Venturi-Düse angeordnet ist.

3. Vorrichtung (1) nach den Ansprüchen 1 oder 2, **dadurch gekennzeichnet, dass** die Vorrichtung mit einer Steuereinheit (9) und einem Drucksensor (10) ausgestattet ist.

4. Vorrichtung (1) nach zumindest einem der vorhergehenden Ansprüche, **dadurch gekennzeichnet, dass** die Treibladung (4) derart konkav ausgeführt ist, dass eine zu einer Achse konzentrische Druckgasströmung (3) erzeugbar ist.

5. Vorrichtung (1) nach zumindest einem der vorhergehenden Ansprüche, **dadurch gekennzeichnet, dass** die Treibladung (4) eine kegelmantelförmige Einlage aufweist.

6. Vorrichtung (1) nach zumindest einem der vorhergehenden Ansprüche, **dadurch gekennzeichnet, dass** die Treibladung (4) eine Schneid- oder Hohlladung aufweist.

7. Vorrichtung (1) nach zumindest einem der vorhergehenden Ansprüche, **dadurch gekennzeichnet, dass** die Vorrichtung (1) mehrere, an einander gegenüberliegenden Seiten der Treibladung (4) angeordnete Düsenanordnungen (11) aufweist.

8. Vorrichtung (1) nach zumindest einem der vorhergehenden Ansprüche, **dadurch gekennzeichnet, dass** die Vorrichtung (1) als ein Bestandteil einer mobil mitführbaren Ausrüstung, insbesondere der persönlichen Schutzausrüstung für Einsatzkräfte ausgeführt ist.
